# EUROPEAN PATENT APPLICATION

(11) **EP 4 772 841 A2**
(43) Date of publication of application: **08.07.2026**
(21) Application number: 25222614.7
(22) Date of filing: 11.12.2025
(51) Int. Cl.: G01D 5/353, G01K 11/32, G01L 1/24

(54) **A SYSTEM AND A METHOD OF OPTICALLY MEASURING AT LEAST TWO DIFFERENT ENVIRONMENTAL PARAMETERS**

(30) Priority: 17.12.2024 NL 2039377
(71) Applicant: PhotonFirst IP B.V., 1812 SC Alkmaar (NL)
(72) Inventor: CUI, Moxi, ALKMAAR (NL); VAN LEEST, Matheus Maria, ALKMAAR (NL)
(74) Representative: Algemeen Octrooi- en Merkenbureau B.V.

(57) **Abstract**

A system and a method for measuring at least two different environmental parameters of at least one optically reflective sensor in an optical waveguide comprising at least two orthogonal propagation modes, the optical waveguide further comprising an optical delay component, wherein the optical delay component defines a different propagation duration for one propagation mode relative to the other propagation mode, the system further comprising a measurement subsystem optically coupled to the optical waveguide, wherein a light emitter is configured to emit an unpolarized light pulse into the optical waveguide through the optical delay component towards the at least one optically reflective sensor, and wherein a light detector is configured for detecting a first reflection pulse and a second reflection pulse reflected by the at least one optically reflective sensor, and wherein a time difference between the first time and the second time relates to the different propagation duration of the at least two orthogonal propagation modes, caused by the optical delay component.

## Description

### TECHNICAL FIELD OF THE DISCLOSURE

The present disclosure pertains to a system and a method of optically measuring at least two different environmental parameters of an optical waveguide comprising at least two propagation modes and at least one optically reflective sensor.

### BACKGROUND OF THE DISCLOSURE

Optical sensing applications wherein an optically reflective sensor in an optical waveguide is utilized have the intrinsic difficulty to discriminate between different physical parameters. For instance, an optical temperature sensor may also respond to pressure and/or strain changes.

Therefore, the field has already experimented with different approaches towards discriminating those parameters by for example utilizing multiple sensors. However, all of these efforts thus far have resulted in more complex, expensive, bulky optical systems and sensing schemes.

For that reason, the current goal of the disclosure of this patent application is to provide a system which can measure and discriminate optically between two different physical parameters.

### SUMMARY OF THE DISCLOSURE

In a first aspect, the disclosure pertains to a system for measuring at least two different environmental parameters of at least one optically reflective sensor in an optical waveguide comprising at least two propagation modes, the optical waveguide further comprising an optical delay component, wherein the optical delay component defines a different propagation duration for one propagation mode relative to the at least other propagation mode, the system further comprising a measurement subsystem optically coupled to the optical waveguide:
a light emitter configured to emit an unpolarized light pulse into the optical waveguide through the optical delay component towards the at least one optically reflective sensor; and
a light detector configured for detecting a first reflection pulse at a first time and a second reflection pulse at a second time after the first time, wherein both the first reflection pulse and the second reflection pulse have been reflected by the at least one optically reflective sensor, and wherein a time difference between the first time and the second time relates to the different propagation duration of the at least two propagation modes, caused by the optical delay component. It is to be understood within the context of the present disclosure, that the feature 'propagation mode' could be the single mode (a.k.a. the basic mode or zero-order mode) and/or higher order TE mode of propagation or the single mode (a.k.a. the basic mode or zero-order mode) and/or higher order TM mode of propagation of the unpolarized light pulse emitted by the light emitter into the optical waveguide. Alternatively, a propagation mode may also be understood as constituting a different polarization state of the light pulse. For a better understanding of the disclosure, it is to be understood that the single mode having different polarization states is exemplary for any of the above mentioned propagation modes.

A system according to the disclosure as outlined above is able to discriminate between two different physical parameters while still utilizing a simple and non-complex measurement subsystem. Namely, an optical delay component is used to delay an, from the measurement subsystem, emitted unpolarized light pulse into at least two different propagation modes. These propagation modes may be understood as being either different polarization states, or different transverse electromagnetic modes. In the first case, these two states could be horizontally linear polarized light and vertically linear polarized light. However, any pair of polarization states may be used as basis, for instance given as an alternative; right-handed circular polarized light and left-handed circular polarized light. For the second case, different electromagnetic modes could be realized in dual-mode or few-mode optical fibers.

The benefit of the system according to the disclosure is that the simple/non-complex measurement subsystem can be used, which is not required to be able to differentiate between these different propagation modes. The optically delay element is the respective element in the system which is able to differentiate between the two propagation modes and introduces a propagation duration mismatch between the two. In the field, this may also be known as having a different path-length , or equivalently, a different travel time for each mode.

The delay or difference in propagation duration that is induced by the optical delay element is of such magnitude that the unpolarized light pulse is separated into two distinct light pulses at least when interacting twice with the optical delay element, wherein each light pulse is propagating on a distinct own propagation axs. The above principle is also known in the technical field as Time Domain Multiplexing (TDM), wherein independent signals are emitted and transmitted along a common transmission path, i.e. along an optical fiber, wherein the signals appear only a fraction of time on the path according to agreed or system-implemented rules. This is a common method used for processing of pulsed or gated light. This way, the measurement subsystem only needs to differentiate based on the arrival timing instead of the propagation axes or polarization.

The already in time separated light pulses would then arrive at the optically reflective sensor and interact with it, resulting in a first reflection pulse propagating on a first propagation mode and in a second reflection pulse propagating on a second propagation mode. These reflection pulses would thus travel backwards in the optical waveguide from the optical reflective sensor towards the measurement subsystem and would interact for a second time with the optical delay element.

The unpolarized light pulse sent from the measurement subsystem is a light pulse having a pulse duration width and having a pulse energy spectrum. Typically, a plurality of pulses are emitted in a regular pattern, the duration between consecutive unpolarized light pulses is known as the repetition rate and the ratio between the duration between the consecutive unpolarized light pulses and the pulse duration width is known as the duty cycle. With each pulse the instantaneous at least two environmental parameters are measured from the optically reflective sensor. When a plurality of pulses are consecutively emitted the instantaneous at least two environmental parameters can be measured and monitored. Furthermore, it would allow to perform further mathematical operations on the determined environmental parameters, such as averaging, differentiation, integration etc.

The optically reflective sensor should be understood to interact with each light pulse on each propagation mode independently. In other words this means that the optically reflective sensor affects the pulse energy spectrum of each light pulse on each propagation axes. For instance, at one particular temperature the reflected pulse may have a central wavelength peak around 1550 nm, whereas at an elevated temperature the pulse central wavelength may shift towards 1550.1 nm. Furthermore, the absolute intensity of the pulse wavelength spectrum peak may be different for the different environmental effects.

An environmental effect is a measurable characteristic of the environment of the optically reflective sensor. The environmental effect causes changes in the behavior of the optically reflective sensor. Only upon measurement of said effect, we speak of an environmental parameter, which is an indicative parameter of the environmental effect.

The expert in the field would understand that the three distinct properties of light that are being exploited in the system according to the disclosure are timing, wavelength, and mode state. It should thus be noted that the measurement subsystem only measures timing and wavelength, whereas the optical delay element only acts on the timing and the mode state, which causes different effective refractive index in the delay element. Lastly, the reflective optical sensor only interacts with the wavelength and mode state. Since the distinct optical properties are different for all three above-mentioned components of the system, a conversion between one of the optical properties can be achieved. In this regard, the different responses of the optically reflective sensor towards different mode state is separated timing-wise, such that the measurement subsystem does not need to distinguish between different modes within a mixed retrieved signal or keep mode signal separate entirely throughout the measurement configuration.

The expert in the field would understand that a full-polarization system is expensive and complex, especially for the measurement subsystem of said system. Furthermore, polarization maintaining (PM) fibers require more complex connectors, making coupling to sensor arrays and/or fiber networks more expensive and difficult.

**In** an example, the system comprises a processing unit configured for:
- determining a first parameter of the at least two different environmental parameters using the first reflection pulse; and
- determining a second parameter of the at least two different environmental parameters using the second reflection pulse.

With each emitted unpolarized light pulse, the system performs two measurements of the at least one optically reflective sensor, each having travelled on a different polarization axes. Therefore, it is possible to measure two different environmental parameters. The optically reflective sensor may namely be understood to react differently to the influences of different environmental effects for each propagation axes. For instance, temperature may affect the first propagation axis and therefore becomes measurable with the first reflection pulse, whereas strain may be affecting the second propagation axis and therefore becoming measurable with the second reflection pulse.

In another example of the system, a processing unit is configured for determining the first parameter and second parameter jointly by solving a system of equations involving a first equation pertaining to the first reflection pulse and a second equation pertaining to the second reflection pulse.

In the previously sketched situation that one environmental parameter only affects one propagation axes of the optically reflective sensor would be an ideal situation. However, practically, it is expected that one environmental effect affects both propagation axes, wherein one propagation axes is affected more than the other propagation axes. Therefore convoluted measurements are to be expected to be measured by the measurement subsystem for each reflection pulse. However, by solving a system of equations, wherein the at least two parameters are considered to be affecting (to different extends) both propagation axes, the individual/unconvoluted at least two environmental parameters can be determined.

In a further example of the system according to the disclosure, the optical delay element comprises two polarization beamsplitters defining a difference in propagation path duration between the two orthogonal propagation axes.

In a specific corresponding example, the difference in propagation path length of the two orthogonal propagation axes is at least 0.5 meter.

A delay can be induced in an unpolarized light pulse, by splitting said unpolarized light pulse in two orthogonal polarization bases and having a different propagation duration between both orthogonal propagation axes. Herein, it can be understood that each polarization of the two orthogonal polarizations travels along a distinct propagation axis. A different propagation duration can be induced by having each polarization travel through a different medium or by travelling through the same medium but having a different propagation path length. In the latter case, it has been found that a propagation path length difference of at least 0.5 meter separates the pulses of the two propagation axes in time, such that they can be distinguishable by the measurement subsystem.

Alternatively, in yet another example of the system according to the disclosure, the optical delay element comprises a birefringent optical fiber.

Birefringent optical fibers are examples of a material which possess different optical properties for different propagation axes. Such fibers may be utilized to induce a delay because of a different optical travel speed for each propagation axis. For such fibers, a beneficial implementation may be to have the at least two orthogonal modes be at least two orthogonal polarizations.

And in a specific corresponding example, the birefringent optical fiber has a length of at least 100 meter, preferably of at least 500 meter, more preferably of at least 1500 meter.

Another example of the system according to the disclosure is directed to the at least two different environmental parameters of the at least one optically reflective sensor comprising any one or more of the following; temperature, strain, and pressure; and preferably comprise temperature and strain.

A delay can also be induced in an unpolarized light pulse by not splitting the two polarizations of the two propagation axes, but having at least two transverse electromagnetic modes in the fiber. Dual-mode or multimode optical fiber are examples of such media with different properties, e.g. effective refractive indexfor each propagation mode. Light in one specific propagation mode travels slower through the fiber than the other. It has been found that by utilizing an optical fiber of adequate length the two different modes can be separated in time such that the measurement subsystem can distinguish them.

In a further example, the at least one optically reflective sensor comprises at least one of the following: a Distributed Bragg Reflector, DBR; a Fiber Bragg Grating, FBG; a Photonic Bandgap Structure, a Photonic Crystal; Reflective Coating; and/or a Grating Structure and/or Specialty reflectors such as Pi-shift FBG, Long Period Grating (LPG), Fabry Perot (FP).

Most of the above described reflective sensors operate due to the fundamental principle of Fresnel reflection, where light reflects and refracts at an interface. These interfaces are formed by a periodic alternating refractive index over a defined length. At each interface a portion of the incoming light is reflected and/or refracted, which would interfere with a reflected and/or refracted light from another interface.

That way, very specific wavelengths would be reflected into the far field, which can be easily tuned by changing the period, duty cycle and/or shape of the refractive index interfaces. More generally, the above-described sensors would have a spectral response to the environment, having a center wavelength (center of gravity), and an associated spectral width. In another example, the optical waveguide of the system further comprises at least one optical reflector, at least partially reflecting a light pulse.

Alternatively, the optical delay element comprises at least one optical reflector, at least partially reflecting a light pulse.

This at least one optical reflector may be positioned at the end of the optical waveguide, but may also be positioned in between. The at least one optical reflection reflects an incoming light pulse and creates a back travelling reflection pulse, similar to the optical reflective sensor, however the at least one optical reflector does not change or modulate the pulse wavelength spectrum. This back travelling reflection pulse may then again interact with the optical reflective sensor, which would result yet again in a backwards traveling transmission pulse and a forwards travelling second reflection pulse.

The transmission pulse would eventually arrive at measurement subsystem and may be used for measuring the environmental parameter.

The second reflection pulse, however, is travelling forwards towards the optical reflective sensor and would be reflected back by it, thereby travelling back to the optical reflective sensor. Upon interaction resulting again in a backwards travelling transmission pulse and forwards travelling a reflection pulse, but this time of the second reflection pulse. The transmission pulse of the second reflection pulse, however, has a similar spectrum as the first reflection pulse. Namely, being the typical spectral response of the optical reflective sensor of the moment of interaction.

This process may repeat a couple of time, but with every repeat the intensity of the pulse travelling between the optical reflective sensor and the optical reflector would diminish. Therefore, after some time the pulse would no longer be useful for measurement and would only constitute to noise in the measurement.

Do note, that the description of "forward" in the previous section is from the measurement subsystem towards the optical reflector, and that "backward" is considered to be from the optical reflective sensor or optical reflector towards the measurement subsystem.

In an example thereof, the at least partial reflection of a light pulse of the at least one optical reflector is propagating on a different propagation axis than the light pulse was propagating on.

It may be beneficial to utilize an optical reflector, which rotates/flips the light on the two propagation axes. Namely, in that case, the reflection pulse travels on the other propagation axes and would thus interact with the second axes of the optical reflective sensor, thereby measuring the second environmental parameters.

In combination with the above describe working of the pulses interacting with an optical reflective sensor and an optical reflector. The measurement subsystem would receive at least 3 consecutive pulses, wherein the 1^{st} pulse is the reflection part of the pulse interacting with the optical reflective sensor (travelling on a first propagation axis), the 2^{nd} pulse is the transmission part of said pulse having interacted with the optical reflective sensor (travelling on a second propagation axis), and the 3^{rd} pulse is the reflection part of the transmission part of the pulse (again travelling on the first propagation axis, but having interacted with the optical reflective sensor on the second propagation axis). In the art, such rotating optical reflection may be known as a Faraday reflector or rotator.

In another example, the optical reflector is specific to one propagation axis of the optical waveguide. In other words, the optical reflector may only reflect one specific polarization of light travelling on a specific propagation axis. The system may then utilize at least two optical reflectors at different positions along the waveguide acting on different propagation axis to create a propagation delay in an unpolarized pulse, wherein a first reflector reflects on the first propagation axis and a second reflector needing more travel distance reflects on the second propagation axis.

In an example of the system according to the disclosure, the optical reflective sensor is positioned in between optical delay element and the measurement subsystem.

**In** an alternative example, the optical delay element is positioned in between the optical reflective sensor and the measurement subsystem.

The above-mentioned examples of optically reflective sensors can be utilized, since they are known to have the property of being able to interact with environmental effects differently on different propagation axes of said optically reflective sensor, when implemented in an optical waveguide. Furthermore, these examples of optically reflective sensors can be tuned to specific wavelength spectra based on their structure, which makes them beneficial to implement and tailor towards existing measurement subsystems.

A second aspect of the disclosure pertains to a method of measuring at least two different environmental parameters of at least one optically reflective sensor in an optical waveguide comprising two orthogonal propagation axes, the optical waveguide further comprising an optical delay component, wherein the optical delay component defines a different propagation duration for one propagation axis relative to the other propagation axis, the method comprising, at a measurement subsystem optically coupled to the optical waveguide:
- emitting an unpolarized light pulse into the optical waveguide towards the at least one optically reflective sensor; and
- detecting a first reflection pulse at a first time and a second reflection pulse at a second time after the first time, wherein both the first reflection pulse and the second reflection pulse have been reflected by the at least one optically reflective sensor, and wherein a time difference between the first time and the second time relates to the different propagation duration of the two orthogonal propagation axes, caused by the optical delay component.

The benefit of utilizing the method according to the disclosure allows the user of the system to emit unpolarized light pulses and detect reflection pulses without needing to identify their polarization state. Therefore, a measurement subsystem can be used that is much simpler and less expensive than full-polarization systems. In the method according to the disclosure, an optical delay element is utilized to separate the unpolarized light pulse timing-wise onto two propagation axes. Then, the two light pulses having different polarization bases will interact with the two propagation axes of the optically reflective sensor to result in a first reflection pulse and a second reflection pulse. The two reflection pulses are traveling backwards through the optical waveguide from the optically reflective sensor through the optical delay component towards the measurement subsystem. Since the reflection pulses interact with the optical delay component a second time, it is not necessarily needed that they are completely separated timing-wise with the first interaction. They should, however, be completely separated after two interactions with the optical delay component.

The optically reflective sensor may be understood to be a sensor to measure at least two environmental effects. Especially, the sensor acts (predominantly) differently to different environments effects for each of its propagation axes. The optically reflective sensor may be understood to modulate the intensity and/or the peak position of a pulse wavelength spectrum for each propagation axis. For instance, an initial temperature may result in a first reflection pulse on the first propagation axis having a certain pulse wavelength spectrum, which has a specific peak positions and spectral width. A second elevated temperature may then result in another first reflection pulse on the first propagation axis having a pulse wavelength spectrum, which has a diminished intensity, a red-shifted peak position and perhaps an increased spectral width. **It** may be preferable to consider the shift in the peak position of the two pulses. Whereas on the second propagation axis no changes due to temperature effects are observed.

**In** an example of the method according to the disclosure, the method further comprises the steps of:
- determining a first parameter of the at least two different environmental parameters using the first reflection pulse; and
- determining a second parameter of the at least two different environmental parameters using the second reflection pulse.

As sketched above in the description of the system and in the method according to the disclosure, each propagation axis of the optically reflective sensor responds differently to different environmental effects, thereby enabling the determination of environmental parameters of both environmental effects. Since the first reflection pulse and the second reflection pulse are separated timing-wise by means of the optical delay component, a first environmental parameter can be determined from the first reflection pulse, corresponding to the first propagation axis, and a second environmental parameter can be determined from the second reflection pulse, corresponding to the second propagation axis.

**In** yet another example of the method, the first parameter and second parameters are determined jointly by solving a system of equations involving a first equation pertaining to the first reflection pulse and a second equation pertaining to the second reflection pulse.

Practically, an environmental effect never only affects one propagation axis of the optically reflective sensor, but affects one propagation axis more than the other propagation axis. Therefore, convoluted measurements would be obtained at the measurement subsystem, wherein both the first reflection pulse and the second reflection pulse contain information of the same environmental effect. Therefore, to determine the actual environmental parameter, corresponding to said environmental effect, a system of equations needs to be solved to obtain a value of an individual environmental parameter.

A further example of the method is directed to the measuring of the at least two different environmental parameters of the optically reflective sensor comprising determining any one or more of the following; temperature, strain, and pressure, wherein the two environmental parameters are preferably temperature and strain.

The above-mentioned list contains examples of environmental effects of which environmental parameters can be measured with the method according to the disclosure. Herein is the implementation of the optically reflective sensor also of importance, since the optically reflective sensor determines to which environmental effect it is sensitive to. Furthermore, the optically reflective sensor implementation also dictates to which extend each propagation axis is sensitive to which environmental effect.

All in all, a system is provided that can discriminate between two different physical parameters while still utilizing a simple and non-complex measurement subsystem. Namely, unpolarized light pulses are separated onto two different propagation axes, which result in two individual measurements at the at least one optically reflective sensor. The benefit of such a system is that the measurement subsystem is not required to be able to differentiate between these different propagation axes, making it simpler, cheaper and less-complex. An optical delay element is used to separate light travelling on the two propagation axes in time, such that the measurement system can be agnostic to the propagation axis. Furthermore, an optically reflective sensor in the optical waveguide is used, which responds on each of its propagation axes differently to different environmental effects. By analysis of the changes in the reflection pulses at the measurement subsystem corresponding environmental parameters can be determined for at least two different environmental effects at approximately the same time.

### SHORT DESCRIPTION OF THE FIGURES

The disclosure will now be discussed with reference to the drawings, which show in:
Figure 1 shows the general principle with which an unpolarized light pulse is separated into two light pulses for measuring two environmental parameters;
Figures 2A-2D show various configurations of systems according to the disclosure;
Figures 3A-3E show pulse wavelength spectra for various position throughout the system;
Figures 4A-4C show arrival timings of various reflection pulses in different configurations.
Figures 5A-F show different radial cross-sections of birefringent fibers
Figures 6 shows a longitudinal cross-sections of optically reflective sensors according to the disclosure.

### DETAILED DESCRIPTION OF THE FIGURES

For a proper understanding of the disclosure, in the detailed description below corresponding elements or parts of the disclosure will be denoted with identical reference numerals in the drawings.

The examples given in the drawings are to be understood to explain the general concept of the present disclosure. The specific configurations of the optical delay component 200 and the optically reflective sensor 300 may vary depending on the actual implementation and requirements of the system 1000. Nevertheless, the principles shown in the drawings will be understood by the expert in the field to be transferable.

Throughout the description of the drawings, the wording of a single optically reflective sensor 300 or a single environmental parameter may be used. However, it should be understood that the system 1000 measures at least two environmental parameters and may even comprise multiple optically reflective sensors 300.

Furthermore, the environmental effects, resulting in the determination of environmental parameters by the system 1000 may comprises any or more of the following; temperature, strain, and pressure. The environmental effect can be understood as the physical influence causing the optically reflective sensor 300 to interact differently with light, whereas the environmental parameter is a unit value representative for that given physical influence. For instance, this of the environmental parameter of 20 °C being a representative value of the environmental effect of temperature at 20 °C.

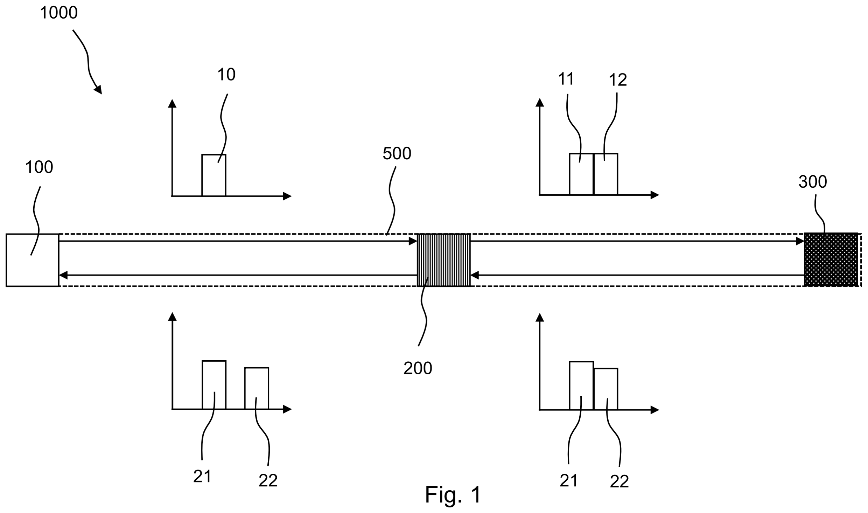

**In** Fig. 1, the general principle of the system 1000 and the method for measuring at least two different environmental parameters of at least one optically reflective sensor is depicted. Here, an unpolarized light pulse 10 is emitted, from a measurement subsystem 100, into an optical waveguide 500 comprising two orthogonal propagation axes. The optical waveguide 500 further comprises an optical delay component 200 and an optically reflective sensor 300, wherein the optical delay component 200 defines a different propagation duration for one propagation axis relative to the other propagation axis.

The latter is shown in the inset figures in Fig. 1. Prior to interacting with the optical delay component 200 an unpolarized light pulse 10 is shown on an intensity-time graph. After interacting with the optical delay component 200, the unpolarized light pulse 10 has been separated into a first separation part 11 and a second separation part 12, wherein a difference in the arrival time of the two individual separation parts 11/12 is shown in the inset intensity-time graph.

Once the first separation part 11 and the second separation part 12 arrive at the optically reflective sensor 300, they would interact with it, creating a first reflection pulse 21 and a second reflection pulse 22. It should be noted that the interaction of the two separation parts 11/12 occurs at different propagation axes of the optically reflective sensor 300. Further, it should be noted that the optically reflective sensor 300 is chosen such that its two propagation axes respond differently to different environmental effects. This way, a first environmental effect may only or mostly affect the first propagation axis, whereas a second environmental effect may only or mostly affect the second propagation axis. This effect is depicted in the inset intensity-time graph on the backwards going direction from the at least one optically reflective sensor 300 to the optical delay component 200, wherein the intensities of the first and the second reflection pulse 21/22 are shown to have changed compared to the incoming first and second separation parts 11/12. Do note, that a change in intensity is a mere example and that the measurable change may be in the pulse spectrum's intensity, width, peak position, shape, and/or arrival time.

The first and second reflection pulses 21/22 travel back from the optically reflective sensor 300 through the optical delay component 200 to the measurement subsystem 100. Because the first and second reflection pulses 21/22 interact with the optical delay component 200 (again), the difference in the arrival timing of the two pulses 21/22 may be separated even more. This effect is shown in the inset intensity-time graph on the backwards going direction between the optical delay component 200 and the measurement subsystem 100.

Note that in this disclosure no further information is given about the measurement subsystem 100. The measurement subsystem 100 may comprise multiple electronic, electrical, and optical components. For the sake of this disclosure, the measurement subsystem 100 can be considered a black box, which is able to output a plurality unpolarized light pulses 10 at a particular repetition rate and a particular duty cycle. Furthermore, the measurement subsystem 100 is capable of detecting a reflection pulse 21/22 and determining its absolute pulse wavelength spectrum, meaning the intensity between consecutive pulses can be compared.

At the measurement subsystem 100, a light detector is configured for detecting the first reflection pulse 21 at a first time and the second reflection pulse 22 at a second time after the first time. The time difference between the first time and the second time is related to the different propagation duration of the two orthogonal propagation axes caused by the optical delay component 200, as explained above.

With such a system 1000, a discrimination can be made between two different physical parameters measured on two different propagation axes while still utilizing a simple and non-complex measurement subsystem 100. In existing systems, a full-polarization method has to be employed in order to distinguish between the two different propagation axes, since the pulses of the two different propagation axes are to be expected to arrive at the same time. Here, it has been found that by utilizing an optical delay component 200 an unpolarized light pulse 10 can be separated into two different separation parts 11/12 travelling on two different propagation axes.

In a particular example, the two propagation axes would correspond to horizontally linear polarized light and vertically linear polarized light. In that regard, Fiber Braggs Gratings, FBG, may be used, as they are known to interact differently with environmental effects for each propagation axis. Practically, the effect is not completely decoupled from the other propagation axis and only has a lesser effect. Therefore, a processing unit should be utilized to determine a first parameter of the at least two different environmental parameters using the first reflection pulse, and to determine a second parameter of the at least two different environmental parameters using the second reflection pulse.

Because of the convolution in the measurements of the first parameter and the second parameter, it may be needed to solve a system of equations involving a first equation pertaining to the first reflection pulse and a second equation pertaining to the second reflection pulse. Only that way, the individual environmental parameter may be obtained.

The benefit of using an optical delay component 200, resulting in separated first 21 and second reflection pulses 22, further reliefs the requirements of the measurement subsystem 100, since now the subsystem 100 only has to measure a distinction in arrival time, which is easier and cheaper than differentiating between propagation axis or polarization state.

With every emitted unpolarized light pulse 10, an instantaneous measurement of at least two environmental parameters can be performed. When the repetition rate of the unpolarized light pulses 10 is high enough, the environmental parameters can be measured consecutively in a semi-continuously manner. These measurements could even be further processed by the processing unit to perform mathematical operations, such as averaging, differentiation, integration etc.

Typically in prior art system, complex polarization separation in the measurement subsystem 100 is needed to be performed because the separation of the two polarization peaks would not or only hardly exist, meaning they would substantially spectrally overlap.

Differential sensing requires a particular high precision, so any crosstalk, or more specifically changes therein as the optical waveguide 500 moves, would result in a degradation in accuracy. Therefore, a high signal distinction is required between both axes > 30 dB, or even in higher accuracy systems. This is very difficult if not practically impossible to maintain by mere polarization maintenance with polarization maintaining fibers, connectors, and readout system architecture.

The inventors have accordingly found that it therefore is, much easier to decouple the two propagation axes in timing instead of spectrally, which allows for easier and more accurate detection and measurement of the two spectral responses for each propagation axis of different environmental effects.

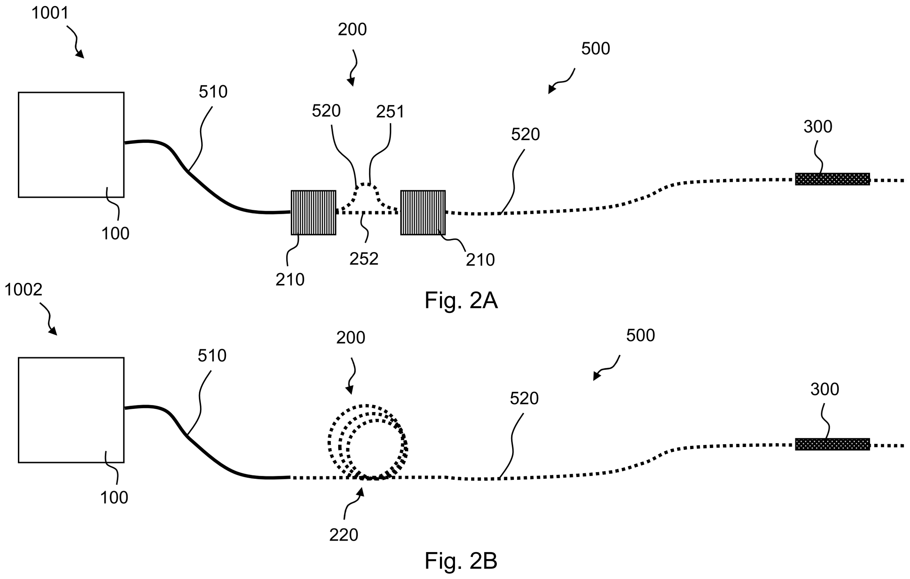

In Fig. 2A, a first example of the system according to the disclosure is depicted, wherein the optical delay element 200 comprises two polarization beamsplitters 210 defining a difference in propagation path duration between the two orthogonal propagation axes. The different propagation path duration is achieved by splitting the unpolarized light pulse 10 into a first separation part 11 and transmitting it over a first propagation path 251 having a first path length and transmitting a second separation part 12 over a second propagation path 252 having a second path length. In an example, the first separation part 11 is vertically linear polarized light and the second separation part 12 is horizontally linear polarized light.

In Fig. 2A, it is further shown that the first propagation path 251 is longer than the second propagation path 252, in particular the difference in propagation path length of the two orthogonal propagation axes is at least 0.5 meter. Since a first separation part 11 of an unpolarized light pulse 10 traveling on the first propagation path 251 being longer than the second propagation path 252, the first propagation part 11 takes longer to reach the second polarization beamsplitter 210 than the second propagation part 12 would. At the second polarization beamsplitter 210, the two separation parts 11/12 are combined into one single fiber again. In this way, the unpolarized light pulse 10 is effectively separated in two separation parts 11/12, which have distinguishable arrival timing (at least after two interactions with the optical delay element 200. Note that this difference in propagation duration is dictated by the pulse width of the unpolarized light pulse 10 and the repetition rate at which a plurality of pulses is emitted from the measurement subsystem 100.

Please note that the depiction and size of the polarization beamsplitters 210 is mere representative and that the actual beamsplitters fit within an optical waveguide 500. Typically, these fiber beamsplitters are made by fusing two optical fiber together, which has a significant smaller formfactor than the polarization beamsplitter 210 as shown in the figure.

The two separated parts 11/12 subsequently travel to the optically reflective sensor 300, with which they interact, to form a first reflection pulse 31 and a second reflection pulse 32. The interaction of each reflection pulse 31/32 occurs on a specific propagation axis of the optically reflective sensor 300 and is affected by an environmental effect. The corresponding environmental parameter for each at least two individual environmental effects can then be determined based on measurements at the measurement subsystem 100 after the reflection light pulses 31/32 have traveled back. This has extensively been described in the accompanying text of Fig. 1, and is thus not further specified here.

Another aspect of the disclosure, that should be highlighted is the type of optical fiber that is used through the optical waveguide 500. As is shown in Fig. 2A, a solid black line is used for a single-mode, SM, fiber 510. This SM-fiber is directly coupled to the measurement subsystem 100 and has not preference or distinction to the polarization of the unpolarized light pulse 10. Even more so, the polarization is not maintained throughout the SM-fiber and the unpolarized light pulse 10 is thus expected to remain unpolarized. Even polarized light put into a SM-fiber would become unpolarized (to a certain extend).

It is further shown that another type of fiber is used, indicated with a dashed black line. This is a polarization-maintaining, PM, fiber 520. The PM-fiber, as the name suggests, ensures that the polarization of the light put into the fiber is maintained throughout. The PM-fiber 520 is shown to be utilized in the system 1001 in the optical waveguide 500. Especially, it is used in the optical delay component 200 and between the optical delay component 200 and the optically reflective sensor 300. The PM-fiber ensures that the two separation light pulses 11/12 and the first and second reflection light pulses 31/32 maintain their polarization state as they travel through the optical waveguide 500 of the system 1001, or in other words the pulses 11/12/31/32 are kept on their respective propagation axis.

**In** Fig. 2B, an alternative example of the system 1002 according to the disclosure is shown, wherein the optical delay element comprises a birefringent optical fiber, specifically large amounts of birefringent optical fiber 220. For instance, the birefringent optical fiber has a length of at least 100 meter, preferably of at least 500 meter, more preferably of at least 1500 meter. Therefore, a spool or coil of fiber 220 is depicted in Fig. 2B.

A birefringent fiber is characterized by its property that different polarizations propagate differently through the fiber, specifically the speed with which they travel is different. Therefore, the two propagation axes of the birefringent fiber may also be known as the slow axis and the fast axis, indicative of the different travel speed of the light.

The above observed effect can be exploited in the present disclosure, especially in the optical delay element 200. Namely, if a long enough birefringent optical fiber is used, an unpolarized light pulse 10, would naturally separate into a first separation part 11 and a second separation part 12 both propagating on a different propagation axis.

In Fig. 2B, two different types of fibers are shown, that are being used in the optical waveguide 500. Here, the SM-fiber 510 is yet again coupled to the measurement subsystem 100 and thereafter is butt-coupled to a birefringent PM-fiber. Then a spool 220 of PM-fiber is used as optical delay component 200 to create a different propagation duration for each of the propagation axis, wherein each propagation axis can be understood to only allow one polarization state to travel thereon.

The expert in the field would understand that PM-fibers are naturally birefringent, but what is meant throughout this disclosure is that the propagation speed for each propagation axis of the birefringent fiber is different, such that a separation of a single inserted light pulse would occur into two light pulses travelling on different propagation axes.

In the description of both Figs. 2A and 2B, the optically reflective sensor 300 is not further specified in detail. In an example, the at least one optically reflective sensor may comprise at least one of the following: a Distributed Bragg Reflector, DBR; a Fiber Bragg Grating, FBG; a Photonic Bandgap Structure; a Photonic Crystal; a Reflective Coating; and/or a Grating Structure. A preferable example implements a Fiber Bragg Grating.

Furthermore, only one optically reflective sensor 300 is shown in both Figs. 2A and 2B. However, the optical waveguide 500 may comprise a plurality of FBGs. These FBGs can have different grating constants or pitch sizes such that a different base resonance wavelength is obtained for each FBG. For instance, a first FBG may predominantly reflect light around 1550 nm, whereas the second FBG along the same optical waveguide 500, would reflect light around 1555 nm. In that case, the reflection pulse of the first FBG would simply pass the second FBG without losing significant amounts of intensity.

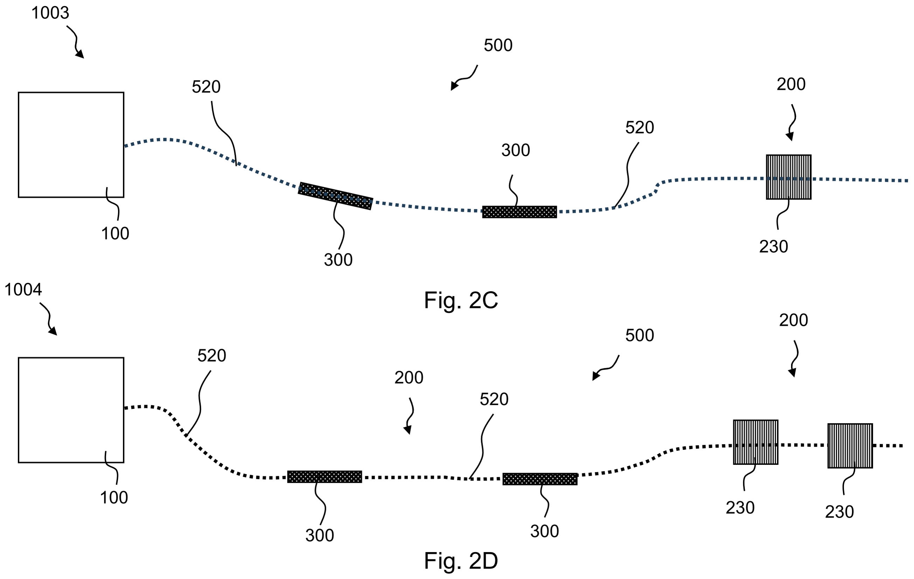

In Fig. 2C another example of a system 1003 according to the disclosure is shown comprising two optical reflective sensors 300 and an optical delay element 200 positioned at the end of the optical waveguide 500. The two optical reflective sensors 300 are constructed to have a different optical response, meaning they would comprise a different center wavelength and a different spectral width, which preferably does not spectrally overlap, but not necessarily has to. The two optical reflective sensors 300 may measure different environmental parameters, but could also very well measure the same environmental parameter.

In this specific example, the optical delay element 200 comprises an optical reflector 230, which may reflect almost 100% of the light. Furthermore, in this example, the optical reflector 230 rotates or flips the propagation axis of the pulse.

In this example, as shown in Figures 2C and 2D, it may be beneficial to have the measurement subsystem 100 emit a polarized light pulse travelling on one propagation axis or install a linear polarizer (not shown) at the beginning of the optical waveguide 500. The light pulse would travel to the first optical reflective sensor 300 and reflect a pulse on a first propagation axis back. Then a reflection pulse from the second optical reflective sensor 300 on the same propagation axis would arrive at the measurement subsystem 100. Then the pulse would arrive at the optical reflector 230, which flips its propagation axis, such that the pulse would travel backwards on the second propagation axis. This backwards travelling pulse would interact first with the second optical reflective sensor 300, resulting in a reflection pulse travelling back to the optical reflector 230 and a transmission pulse travelling towards the measurement subsystem 100. Similarly, the transmission pulse would interact with the first optical reflective sensor, creating yet again two pulses travelling in opposite directions. Preferably, the transmission pulses may be disregarded by the measurement subsystem 100, but alternatively they could be of value for measurements. Since the backwards travelling pulse was travelling on the second propagation axis, all the interaction with the optical reflective sensors 300 was also occurring on said second propagation axis. Therefore, measurements could be taken of the second environmental parameter. Such forward (towards the optical reflector) travelling reflection pulse would flip/rotate again back to the first propagation axis and may partially transmit through the optically reflective sensors 300. Then, the measurement subsystem 100 received those pulses and can determine the environmental parameter's value.

Thus in similar systems to the system 1003 with optical reflectors 230, it should be understood that if only reflection pulses are to be measured, a system with only one optical reflective sensor would receive three consecutive pulses, wherein the first pulse is a measurement of the environmental parameter on a first propagation axis and the third pulse is a measurement of the environmental parameter on the second propagation axis. In a system 1003 with two optical reflective sensors 300, this would be the first pulse for the first optical sensor 300 on the first propagation axis, the second pulse for the second optical sensor 300 on the first propagation axis, the fifth pulse for the fifth pulse for the second optical sensor 300 on the second propagation axis and the sixth pulse for the first optical sensor 300 on the second propagation axis.

In Fig. 2D another system 1004 according to the disclosure is shown comprising two optical reflective sensors 300 and an optical delay elements 200 comprising two optical reflectors 230. In this example, the two optical reflectors 230 reflect electromagnetic radiation, light, on two different propagation axis. For instance, the first optical reflector 230 may reflect on the first propagation axis and the second optical reflector 230 may reflect on the second propagation axis. This way, an optical delay is produced because of any pathlength difference between the two optical reflectors 230. Thus, the longer the path between them, the greater the optical delay. In this example, the measurement subsystem 100 may simply emit an unpolarized light pulse interacting with the optical reflective sensors 300 on both axis, the reflection pulse would contain information on both propagation axis (two environmental parameters) and would thus be difficult to distinguish. However, now the transmission pulses would be reflected back at different times due to a delay between the two optical reflectors 230. The measurement subsystem 100, would thus have to neglect the first two pulses and focus on the third and fourth pulse, which would spectrally be the inverse of the optical reflective sensor 300 spectrum.

It should be noted that in the system 1000 according to the disclosure as exemplified in the Figs. 2A-2D the number of optical delay elements 200 and the number of optical reflective sensors 300 may be variable, depending on the exact implementation and requirements of the system 1000. The elements of these figures could thus very well be exchanged, mixed, enlarged, and/or added together.

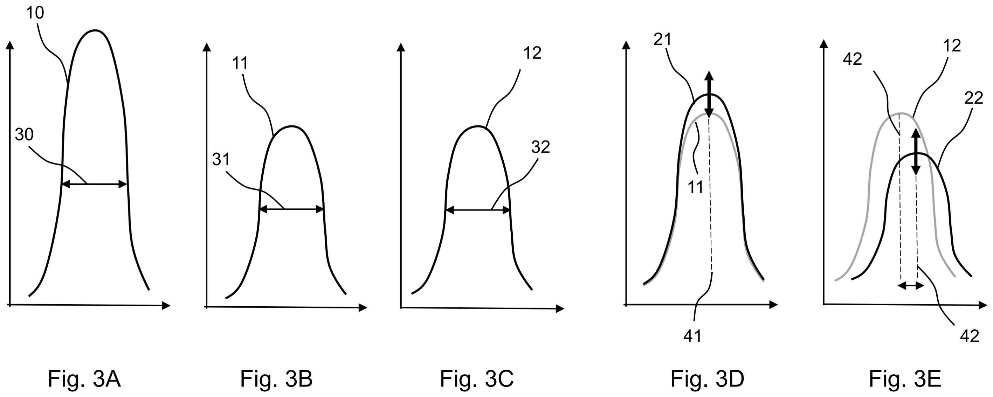

In Fig. 3A-3E intensity-wavelength graphs of light pulses throughout the system are shown. In Fig. 3A an unpolarized light pulse 10, which is being emitted into the optical waveguide 500, by the measurement subsystem 100, is shown. As shown this unpolarized light pulse 10 has a particular pulse wavelength spectrum resulting in a pulse peak intensity and position, and a specific width 30 of the pulse. Typically, in practice this unpolarized light pulse has a width of 30-50 nm. In Fig. 3B-3C, the two separation parts 11/12 are shown after the unpolarized light pulse 10 has interacted with optical delay element 200. As is obvious, is that the intensity-wavelength graphs show similarly looking pulses as in Fig. 3A, except that the intensity of the pulse peak is lower. This can be explained by conservation of energy and that the unpolarized light pulse 10 has been split into 2 roughly equal separation parts 11/12. With a perfect optical delay component 200, this would mean that the peak intensity of one of the two separation parts 11/12 is half the peak intensity of the unpolarized light pulse 10. Furthermore, the separation parts 11/12 have similar peak positions and pulse widths 31/32 as the unpolarized light pulse 10. Note that the latter two not necessarily needs to be the same as the unpolarized light pulse 10, since the optical delay component 200 may have some photon-wavelength dependence in its separation behavior.

In Figs. 3D-3E the first reflection pulse 21 and the second reflection pulse 22 are shown, respectively. Furthermore, the two separation parts 11/12 are shown in light gray to indicate their original peak position, peak width and peak intensity before interacting with the optically reflective sensor 300. As shown in Figs. 3D-3E the interaction with the optically reflective sensor 300 causes the peak intensity to change for the first reflection pulse 21, and causes both a peak intensity decrease and a peak position 42 shift of the second reflection pulse 22. The expert in the field will understand that the actual change in the absolute pulse wavelength spectrum depends on the actual implementation of the optically reflective sensor 300. Any measurable change such as the pulse spectrum's intensity, width, peak position, shape, and/or arrival time, may be utilized by the measurement subsystem 100 to measure the environmental parameter corresponding to the environmental effect causing the measurable change. Typically, in practice, the width of the optical response of the optical reflective sensor 300 is on the order of 0.1-0.3 nm, being a fraction of the spectral width of the unpolarized light pulse. The x-axes of the Figs. 3A-3E, should thus be understood to be not comparable.

Also note that in practice the spectrally there is still a lot of overlap between the pulse from Fig. 3D and Fig. 3E, relating two the two different propagation axes, also known as the fast and the slow axis.

As is shown in Figs. 3D-3E, the sensor acts (predominantly) differently to different environments effects for each of its propagation axes. Therefore, a different measurable change is observed for the first reflection peak 21 (increase of peak intensity) compared to the second reflection peak 22 (decrease of peak intensity and shift of peak position). Note, that the measurement subsystem 100 does not compare the first and second reflection pulses 21/22 to the two separation pulses 11/12, but is compares successive first and second reflection pulses 21/22 belonging to successive unpolarized light pulses 10. Namely, only then, an environmental effect may result in a first reflection pulse 21 travelling on the first propagation axis having a certain pulse wavelength spectrum. A second elevated environmental effect may then result in another first reflection pulse 21 travelling on the first propagation axis having another pulse wavelength spectrum, which is different from the preceding pulse wavelength spectrum. The difference between the two successive first reflection pulses 21 is then used by the system 1000 to determine the environmental parameter corresponding to the environmental effect. Similarly, a second environmental effect will cause differences in successive second reflection pulses 22, resulting in the determination of second environmental parameter.

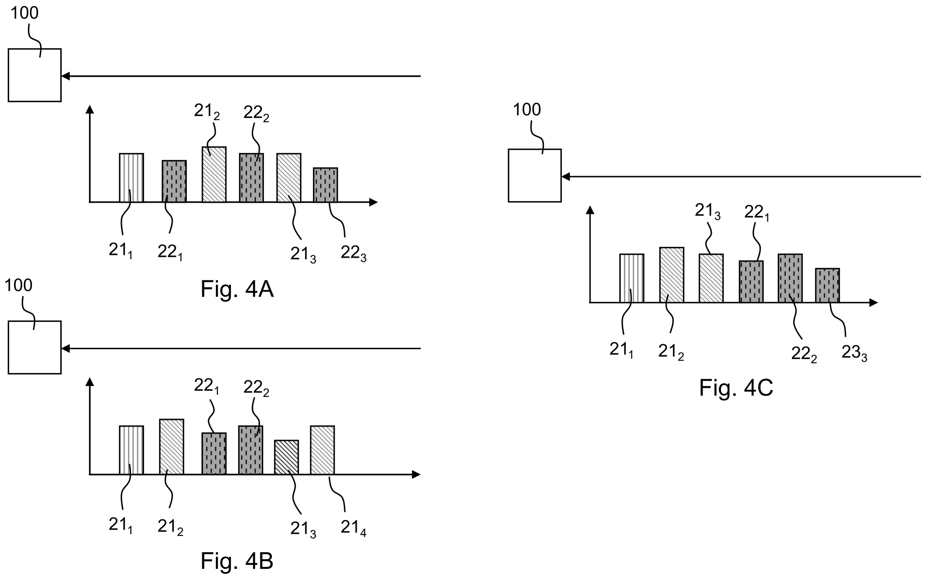

**In** Figs. 4A-C the measurement subsystem 100 is shown with the backwards travelling path of the optical waveguide 500 for the first and second reflection pulse 21/22. Furthermore, timing-intensity graphs are shown in the inset figures. These inset figures show a plurality of reflection pulses 21₁₋₂₋₃/22₁₋₂₋₃ having different arrival timings. In Fig. 4A, the reflection pulses are alternating between the first and the second reflection pulses 21₁-22₁-21₂-22₂-21₃-22₃, such that this would be the sequence of pulses that are subsequently measured by the measurement subsystem 100. In this case, the repetition rate of the unpolarized light pulse 10 is chosen, such that a successive light pulse is emitted with the timing frequency equal to the timing frequency between two consecutive first reflection pulses 21₁-21₂. In other words, the detector of the measurement subsystem 100 needs to measure at double the frequency at which the unpolarized light pulses 10 are emitted thereof.

In Fig. 4B an alternative pulse detection sequence is shown. Here, the reflection pulses comprise two consecutive first reflection pulses, whereafter two second reflection pulses etc. 21₁-21₂-22₁-22₂-21₃-21₄ arrive at the measurement subsystem 100. In this example, the propagation duration difference between the first and the second propagation is of such magnitude that an additional light pulse could be fitted in between. Therefore, the unpolarized light pulses 10 are emitted such that two pulse follow each other in succession having a timing difference similar to the arrival-timing difference between the primary first reflection pulse 21₁ the secondary first reflection pulse 21₂. A subsequent unpolarized light pulse 10 would thereafter be emitted with a timing-spacing equal to the arrival-timing difference between the secondary first reflection pulse 21₂ and a tertiary first reflection pulse 21₃. This way, considering the timing between the primary first reflection pulse 21₁ the secondary first reflection pulse 21₂ as a fixed frequency of the unpolarized light pulse 10 emission, the pulses 10 would appear to be: on-on-off-off-on-on-off-off etc., wherein off-pulses would never be emitted into the optical waveguide 500. In a similar fashion the pulses could be emitted on-on-on-off-off-off-on-on-on-off-off-off etc. as is showcased in Fig. 4C. There the reflection light pulses arrive in a sequence as 21₁-21₂-21₃-22₁-22₂-22₃ at the measurement subsystem 100. These variations of unpolarized pulse emissions depend on how much difference in propagation duration is actually induced by the optical delay element 200. Furthermore, this would allow to effectively use the available measurement time of the detector of the measurement subsystem 100 all the time, such that more data on the environment effect can be obtained.

The expert in the field will understand that it is needed to utilize light pulses 10 for the system 1000, since this allows to separate them for each individual propagation path. If continuous wave, CW, light was used a time-shift would have no effect, because light of both propagation axes would still be detected simultaneously. Namely, a continuous stream of photon shifted in arrival-time would still result in a continuous stream of photons.

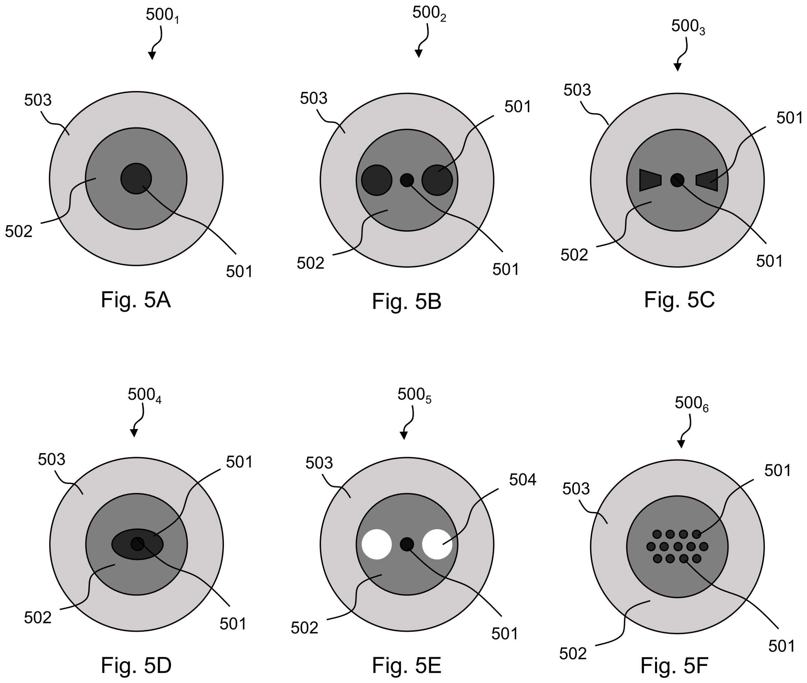

Fig. 5A-5F show cross-sections of birefringent optical waveguides 500 that may be used for the systems 1000 according to the disclosure. These optical fiber typically comprise a core 501, cladding 502 and a buffer 503. In Fig. 5A a single mode fiber 500₁ or multi-mode fiber 500₁ is shown. The actual implementation depends on the size of the core 501, which would be 8 µm for a single mode fiber and >10 µm for a multimode fiber. This type of optical waveguide 500₁ is not specifically known for its birefringence and may not be the best choice.

In Fig. 5B and 5C optical fibers 500₂ and 500₃ are shown comprising three cores 501 arranged in a line. This way, optical waves will experience different optical resistance for one propagation axis compared to another propagation axis. In Fig. 5A the fiber 500₂, also known as polarization maintaining fiber "panda", comprises three round cores, whereas the fiber 500₃, also known as polarization maintaining fiber "bow tie", comprising one round and two trapezium cores.

In a similar way to the fiber 500₂ the fiber 500₅ is constructed, as shown in Fig 5E. However, here, the fiber comprises one fiber core 501 and two voids or air holes 504. Simply because of the different refractive index along the different axes, birefringence arises.

A similar birefringent effect could arise with an elongated ellipse core 501 as shown in Fig. 5D, since the refractive index for each propagation axis would be different.

Lastly, a photonic crystal fiber 500₆ is shown in Fig. 5F, which comprises a plurality of very small cores 501. The arrangement and the spacing between these cores allows for tuning and creating a birefringent effect.

With respect to environmental effects on these different optical waveguides 500₁,...,500₆. The twinhole fiber 500₅ of Fig. 5E is shaped alike the "panda" fiber 500₂ of fiber 5B, wherein the stress rods are replaced with air gaps. This, however, creates a different response for these fibers for different environmental effects. The twinhole fiber 500₅ responds very well to pressure differences, whereas strain or temperature only result in small difference between the different propagation axes.

Lastly, the Photonic Crystal Fiber 500₆ of Fig. 5F can be designed as will. Therefore, can be tuned to maximize a difference between response between the two propagation axes. Furthermore, the Time of Flight effect between the two propagation axes could potentially also be enlarged/maximized.

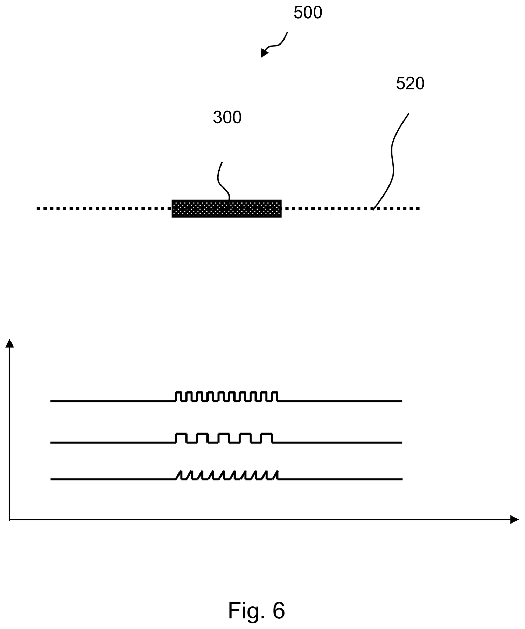

**In** Fig. 6 an optical waveguide 500 comprising an optical reflective sensor 300 and a polarization maintaining fiber 520 are shown. Furthermore, in an inset figure below a distance-refractive index graph is shown of the optical waveguide 500 along a longitudinal direction. Here, three examples of what the refractive index would look like inside the optical reflective sensor 300 are shown in a staggered way. Do note that the absolute and relative amplitudes do not matter, the inset image is used to indicate what shapes the refractive index provide of the optical reflective sensor 300 may look like.

**In** the first example (top), a square wave or block function of two different refractive indices is shown, having a typical periodicity and duty cycle. This could be manufactured by locally doping parts of the optical fiber of by staggering pieces of fiber and remelting them. In theory the edges of the square wave are very sharp, by in reality there may be some blending between the two refractive indices.

**In** the second example (middle), another square wave of two different refractive indices is shown. This square wave has a different periodicity as compared to the first example. Therefore the optical response would show up having a different center wavelength.

**In** the last example (bottom), a sawtooth wave is shown, wherein the refractive index gradually increases and then suddenly steeply decreases. Such type of refractive index gratings are known to act differently to light coming from either the left or the right, it would thus introduce directionality of the optical sensor for specific wavelengths. This could be beneficial in case such an optical reflective sensor is used in combination with the optical reflector, since that would allow to maximum reflection pulses and minimize transmission pulses, or vise-versa.

All in all, the system 1000 as explained by the figures, is able to discriminate between two different environmental parameters, wherein unpolarized light pulses are separated onto two different propagation axes, which result in two individual measurements coming from interactions of the light pulse 111/12 at the at least one optically reflective sensor 300. The benefit of such a system 1000 is that the measurement subsystem 100 is not required to be able to differentiate between these different propagation axes, making it simpler, cheaper and less-complex. To do so, an optical delay element 200 is used to separate light travelling on the two propagation axes in time, such that the measurement system 100 can be agnostic to the propagation axis. By measuring the reflection pulses 21/22 and determining the changes therein, at the measurement subsystem 100, environmental parameters corresponding to an environmental effect causing changes in the interaction of light pulses **11/12** an optically reflective sensor 300, can be determined for at least two different environmental effects.

### REFERENCE NUMBERS USED IN THE DRAWINGS

- 10: unpolarized light pulse
- 11: first separation part of unpolarized light pulse
- 12: second separation part of unpolarized light pulse
- 21: first reflection pulse
- 21₁-21₂-21₃: first reflection pulse of a primary, secondary, tertiary etc. unpolarized light pulse
- 22: second reflection pulse
- 22₁-22₂-22₃: second reflection pulse of a primary, secondary, tertiary etc. unpolarized light pulse
- 30: width of unpolarized light pulse
- 31: width of first separation part of unpolarized light pulse
- 32: width of second separation part of unpolarized light pulse
- 41: peak position of first separation part of unpolarized light pulse
- 42: peak position of second separation part of unpolarized light pulse
- 100: measurement subsystem
- 200: optical delay component
- 210: polarizing beamsplitter
- 220: large amount of optical fiber
- 230: rotating optical reflector
- 251: first path of the optical delay component
- 252: second path of the optical delay component
- 300: optically reflective sensor
- 500: optical waveguide
- 500₁-...-500₆: first, ..., sixth example of optical waveguide
- 501: core
- 502: cladding
- 503: buffer
- 504: void
- 510: single mode fiber
- 520: polarization maintaining fiber
- 1000: system for measuring at least two environmental parameters
- 1001: beamsplitting example of a system according to the disclosure
- 1002: birefringent example of a system according to the disclosure
- 1003: example of a system according to the disclosure with rotating optical reflector
- 1004: example of a system according to the disclosure with two optical reflectors

## Claims

1. A system for measuring at least two different environmental parameters of at least one optically reflective sensor in an optical waveguide comprising at least two orthogonal propagation modes, the optical waveguide further comprising an optical delay component, wherein the optical delay component defines a different propagation duration for one propagation mode relative to the other propagation mode, the system further comprising a measurement subsystem optically coupled to the optical waveguide:
a light emitter configured to emit an unpolarized light pulse into the optical waveguide through the optical delay component towards the at least one optically reflective sensor; and
a light detector configured for detecting a first reflection pulse at a first time and a second reflection pulse at a second time after the first time, wherein both the first reflection pulse and the second reflection pulse have been reflected by the at least one optically reflective sensor, and wherein a time difference between the first time and the second time relates to the different propagation duration of the at least two orthogonal propagation modes, caused by the optical delay component.

2. The system according to claim 1, comprising a processing unit configured for:
- determining a first parameter of the at least two different environmental parameters using the first reflection pulse; and
- determining a second parameter of the at least two different environmental parameters using the second reflection pulse.

3. The system according to any of the preceding claims, wherein a processing unit is configured for determining the first parameter and second parameter jointly by solving a system of equations involving a first equation pertaining to the first reflection pulse and a second equation pertaining to the second reflection pulse.

4. The system according to any of the preceding claims, wherein the optical delay element comprises two polarization beamsplitters defining a difference in propagation path duration between the at least two orthogonal propagation modes.

5. The system according to any of the preceding claims, wherein the difference in propagation path length of the at least two orthogonal propagation modes is at least 0.5 meter.

6. The system according to any of the claims 1-3, wherein the optical delay element comprises a birefringent optical fiber.

7. The system according to claim 6, wherein the birefringent optical fiber has a length of at least 100 meter, preferably of at least 500 meter, more preferably of at least 1500 meter.

8. The system according to any of the claims 1-3, wherein the optical delay element comprises at least one optical reflector, at least partially reflecting a light pulse.

9. The system according to claim 8, wherein the at least partial reflection of a light pulse of the at least one optical reflector is propagating on a different propagation axis than the light pulse was propagating on.

10. The system according to any of the preceding claims, wherein the at least two different environmental parameters of the at least one optically reflective sensor comprises any one or more of the following; temperature, strain, and pressure; and preferably comprise temperature and strain.

11. The system according to any of the preceding claims, wherein the at least one optically reflective sensor comprises at least one of the following: Distributed Bragg Reflector, DBR; Fiber Bragg Grating, FBG; Photonic Bandgap Structure; Photonic Crystal; Reflective Coating; and Grating Structure.

12. A method of measuring at least two different environmental parameters of at least one optically reflective sensor in an optical waveguide comprising at least two orthogonal propagation modes, the optical waveguide further comprising an optical delay component, wherein the optical delay component defines a different propagation duration for one propagation mode relative to the other propagation mode, the method comprising, at a measurement subsystem optically coupled to the optical waveguide:
- emitting an unpolarized light pulse into the optical waveguide towards the at least one optically reflective sensor; and
- detecting a first reflection pulse at a first time and a second reflection pulse at a second time after the first time, wherein both the first reflection pulse and the second reflection pulse have been reflected by the at least one optically reflective sensor, and wherein a time difference between the first time and the second time relates to the different propagation duration of the at least two orthogonal propagation modes, caused by the optical delay component.

13. The method according to claim 12, comprising further steps of:
- determining a first parameter of the at least two different environmental parameters using the first reflection pulse; and
- determining a second parameter of the at least two different environmental parameters using the second reflection pulse.

14. The method according to claim 13, wherein the first and second parameters are determined jointly by solving a system of equations involving a first equation pertaining to the first reflection pulse and a second equation pertaining to the second reflection pulse.

15. The method according to any of the claims 12-14, wherein measuring of the at least two different environmental parameters of the optically reflective sensor comprises determining any one or more of the following; temperature, strain, and pressure, wherein the two environmental parameters are preferably temperature and strain.
